# EUROPÄISCHE PATENTANMELDUNG

(11) **EP 4 663 275 A1**
(43) Veröffentlichungstag der Anmeldung: **17.12.2025**
(21) Anmeldenummer: 25179047.3
(22) Anmeldetag: 27.05.2025
(51) Int. Cl.: B01D 53/04, B01D 53/26

(54) **TROCKNUNGSEINHEIT UND VERFAHREN ZUR TROCKNUNG EINES GASSTROMS IN EINER ANLAGE ZUR ABTRENNUNG VON KOHLENSTOFFDIOXID**

(30) Priorität: 29.05.2024 DE 102024115078
(71) Anmelder: VOLKSWAGEN AG, 38440 Wolfsburg (DE)
(72) Erfinder: Hofer, Martin, 38118 Braunschweig (DE); Beger, Frank, 30163 Hannover (DE); Wiegel, Marcel, 39649 Gardelegen / OT Sachau (DE); Heimermann, Christian, 38442 Wolfsburg (DE); Kawelke, Peter, 38442 Wolfsburg (DE)
(74) Vertreter: Gulde & Partner

(57) **Zusammenfassung**

Die Erfindung betrifft eine Trocknungseinheit (12) für eine Anlage (10) zur Abtrennung von Kohlenstoffdioxid aus einem Gasstrom. Die Trocknungseinheit (12) umfasst ein Gehäuse (86), eine Mehrzahl von Trocknungsmodulen (100, 102, 104, 106, 108, 110, 112, 114), einen in dem Gehäuse (86) eines der Trocknungsmodule angeordneten Träger (46) zur Aufnahme einer Mehrzahl von Trocknungskassetten (44), sowie mehrere in dem Träger (46) aufgenommene Trocknungskassetten (44). Das Gehäuse (86) weist mindestens eine Einlassklappe (50, 52) zum Verschließen einer Einlassöffnung (51, 53) und mindestens eine Auslassklappe (54, 56) zum Verschließen einer Auslassöffnung (55, 57) auf. Die Trocknungseinheit (12) umfasst ferner eine Gasverteilungsstruktur (58), welche einen Gasstrom durch die Trocknungseinheit (12) aufteilt.

Die Erfindung betrifft ferner eine Anlage zur Abtrennung von Kohlenstoffdioxid aus einem Gasstrom mit einer solchen Trocknungseinheit (12) zur Trocknung des Gasstroms vor der Abtrennung des Kohlenstoffdioxids sowie ein Verfahren zur Abtrennung von Kohlenstoffdioxid aus einem Gasstrom, bei dem der Gasstrom vor der Abtrennung des Kohlenstoffdioxids getrocknet wird.

## Beschreibung

Die Erfindung betrifft eine Vorrichtung und ein Verfahren zur Trocknung eines Gasstroms in einer Anlage zur Abtrennung von Kohlenstoffdioxid aus einem Gasstrom, insbesondere aus der Umgebungsluft, sowie eine solche Anlage gemäß dem Oberbegriff der unabhängigen Patentansprüche.

Aus dem Stand der Technik sind Anlagen und Verfahren zum Abscheiden von Kohlenstoffdioxid aus der Umgebungsluft bekannt. Eine solche Abscheidung kann nach dem sogenannten "Direct-Air-Capture-Verfahren" durchgeführt werden, wobei das Kohlenstoffdioxid unmittelbar aus der Umgebungsluft abgeschieden, eingespeichert oder einem weiteren Prozess zugeführt werden kann. Die Abtrennung von Kohlenstoffdioxid aus der Umgebungsluft kann durch unterschiedliche Sorbenten erfolgen.

Um eine effiziente Abtrennung von Kohlenstoffdioxid aus der Umgebungsluft zu erreichen, werden Anlagen zur Abtrennung von Kohlenstoffdioxid bevorzugt mit erneuerbaren Energien, insbesondere mit Wasserkraft, Windkraft, Geothermie oder Solarenergie betrieben. Ein Betrieb mit Wasserkraft wäre vorteilhaft, da diese kontinuierlich und zuverlässig zur Verfügung gestellt werden kann. Jedoch ist das Potenzial für die Energiegewinnung von Wasserkraft auf entsprechende Flussläufe reduziert und wird schon heute in vielen Regionen nahezu vollständig ausgenutzt, sodass eine Ausweitung der Nutzung von Wasserkraft limitiert ist. Solarenergie und Windkraft können im Wesentlichen ortsunabhängig verwendet werden, die Nutzung ist jedoch durch den Umlauf der Sonne und/oder die Wetterbedingungen am Standort beschränkt.

Typischerweise werden zur Abtrennung von Kohlenstoffdioxid Chemisorbenten und/oder Physisorbenten eingesetzt. Amin-basierte Chemisorbenten haben das Problem der Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie beispielsweise eine inerte Atmosphäre im System durch den Einsatz von Wasserdampf oder anderen Gasen. Diese Schutzmaßnahmen sind aufwendig und teuer. Physisorbenten, wie beispielsweise Zeolithen, haben das Problem, dass die Affinität des Sorbentmaterials für Wasser(dampf) höher ist als für Kohlenstoffdioxid, wodurch die Umgebungsluft vor der Zufuhr zu einem Adsorptionsraum, in welchem das Zeolithmaterial angeordnet ist, zunächst getrocknet werden muss.

Aus der EP 2 759 328 A1 ist ein Verfahren zur Abscheidung von Kohlenstoffdioxid aus einem Gasstrom, beispielsweise aus Verbrennungsabgasen, durch Adsorption von Kohlenstoffdioxid in Kontakt mit einem Adsorptionsmaterial bekannt. Die Adsorption erfolgt durch ein Adsorptionsmaterial, das aus einem porösen festen Träger besteht, der mit einem Amin imprägniert ist, wobei das Adsorptionsmaterial eine mäßige Affinität für Kohlenstoffdioxid aufweist. Vorteilhafterweise umfasst der poröse feste Träger eine geringe Menge des Amins.

Die US 2015 / 0013543 A1 beschreibt eine Anlage zur Abtrennung von Kohlenstoffdioxid aus einem Gasstrom, in der die Menge an verbrauchtem Dampf verringert wird: Die Einheit umfasst einen Auffangmaterialbehälter mit einem Kohlenstoffdioxideinfangmaterial, eine erste Rohrleitung, um zu ermöglichen, dass das Kohlenstoffdioxid-haltige Gas dort hindurch in den Einfangmaterialbehälter strömt, eine zweite Rohrleitung, um zu ermöglichen, dass ein Gas, aus dem Kohlenstoffdioxid entfernt wurde, durch diese aus dem Einfangmaterialbehälter abgeführt wird, eine dritte Rohrleitung zum Einleiten eines dampfhaltigen Gases in das Innere des Einfangmaterialbehälters, und eine vierte Rohrleitung zum Ermöglichen, dass ein desorbiertes Kohlenstoffdioxid-haltiges Gas aus dem Einfangmaterial desorbiert wird, während das dampfhaltige Gas in den Behälter strömt, um durch diesen aus dem Auffangmaterialbehälter abgegeben zu werden. Die Anlage umfasst ferner einen Kompressor zum Komprimieren von Dampf und eine fünfte Rohrleitung zum Anschließen des Auffangmaterialbehälters an einen Ansauganschluss des Kompressors und eine sechste Rohrleitung zum Verbinden eines Auslassanschlusses des Kompressors mit der dritten Rohrleitung.

Ferner ist aus der US 2020 / 0001225 A1 ein Verfahren und eine Anlage zur Abtrennung von einem getrockneten Gasstrom bekannt. Dabei kann die Anlage insbesondere eine Anlage zur Abtrennung von Kohlenstoffdioxid aus der Umgebungsluft sein, welche auch als Direct-Air-Capture-Anlage bezeichnet wird. Die Anlage kann einen Niedrigenergie-Temperatur-Vakuum-Swing-Adsorptionsprozess (TVSA) beinhalten. Ein TVSA-Prozess kann einen mehrstufigen Kohlenstoffdioxid-Sorptionsprozess umfassen, der die Druckentlastung des Sorbentbetts, das Erhitzen des Sorbentbetts, das Entlüften und Spülen des Sorbentbetts und das Abkühlen des Sorbentbetts umfasst.

Die Aufgabe der Erfindung ist es, bei einer Anlage zur Abtrennung von Kohlenstoffdioxid aus einem Gasstrom, insbesondere aus der Umgebungsluft, den Trocknungsprozess zu verbessern und insbesondere die Energieeffizienz der Trocknung zu erhöhen.

Die Aufgabe wird durch eine Trocknungseinheit für eine Anlage zur Abtrennung von Kohlenstoffdioxid aus einem Gasstrom, insbesondere einem Luftstrom, gelöst. Die Trocknungseinheit umfasst dabei eine Mehrzahl von Trocknungsmodulen, die je nach Prozesszustand miteinander verschaltet sind. Jedes Trocknungsmodul umfasst ein Gehäuse, einen in dem Gehäuse angeordneten Träger zur Aufnahme einer Mehrzahl von Trocknungskassetten, sowie mehrere in dem Träger aufgenommene Trocknungskassetten. Das Gehäuse weist mindestens eine Einlassklappe zum Verschließen einer Einlassöffnung und mindestens eine Auslassklappe zum Verschließen einer Auslassöffnung auf. Die Trocknungseinheit umfasst ferner eine Gasverteilungsstruktur, welche einen Gasstrom durch die Trocknungseinheit aufteilt.

Die erfindungsgemäße Trocknungseinheit ermöglicht eine gleichmäßige Anströmung der Trocknungskassetten in der Trocknungseinheit und somit eine besonders effiziente Trocknung eines durch die Trocknungseinheit geführten Gasstroms. Ferner ermöglicht die Trocknungseinheit einen geringen Strömungswiderstand und damit verbunden einen geringen Druckabfall beim Durchströmen der Trocknungsmodule der Trocknungseinheit, wodurch die Förderleistung für den Gasstrom reduziert werden kann. Durch die Gasverteilungsstruktur ist zudem eine effiziente Verschiebung der Regenerationswärme von einem Trocknungsmodul in ein anderes Trocknungsmodul der Trocknungseinheit möglich, wodurch die Energieeffizienz der Trocknungseinheit weiter gesteigert werden kann.

Durch die in den abhängigen Ansprüchen aufgeführten zusätzlichen Merkmale sind vorteilhafte Weiterentwicklungen und Verbesserungen der im unabhängigen Anspruch genannten Trocknungseinheit möglich.

In bevorzugter Ausgestaltung der Erfindung ist vorgesehen, dass mehrere Trocknungskassetten in dem Träger übereinander und/oder nebeneinander angeordnet sind. Dadurch ist eine besonders effiziente Trocknung des Gasstroms mit einem geringen Energieaufwand möglich. Da die Trocknungskassetten gleichmäßig von dem Gasstrom durchströmt werden, wird das in den Trocknungskassetten enthaltene Trocknungsmittel im Wesentlichen gleichmäßig mit Feuchtigkeit beladen, sodass die Trocknungskassetten eine bestmögliche Entfeuchtung des Gasstroms sicherstellen.

In einer vorteilhaften Ausgestaltung der Trocknungseinheit ist vorgesehen, dass eine Gasverteilungsstruktur oberhalb der Trocknungskassetten angeordnet ist. Für eine platzsparende Anordnung mehrerer Trocknungsmodule innerhalb der Trocknungseinheit ist es erforderlich, dass der Ein- und Austritt für den Wärmeverschubgasstrom auf der gleichen Stirnseite der Gehäuse der Trocknungsmodule liegt. Die Gasverteilstruktur ermöglicht für diese Klappenanordnung eine möglichst gleichmäßige Durchströmung der Trocknungskassetten. Zudem kann der vorhandene Bauraum optimal ausgenutzt werden, wenn die Gasverteilungseinrichtung oberhalb der Trocknungskassetten der Trocknungseinheit angeordnet ist.

Gemäß einer bevorzugten Ausgestaltung der Trocknungseinheit ist vorgesehen, dass die Gasverteilungsstruktur eine Einlassseite und eine Auslassseite aufweist, wobei die Einlassseite und die Auslassseite durch zwei oder mehr Verbindungskanäle miteinander verbunden sind. Dadurch kann auf einfache Art und Weise eine Durchströmung der Trocknungseinheit verbessert werden, wodurch die Wärmeabfuhr und die Wärmerückgewinnung aus den Trocknungskassetten der Trocknungseinheit verbessert wird. Dabei wird der Luftstrom so geführt, dass er stets durch das Sorbentbett geführt wird, um von der Einlassseite zur Auslassseite zu gelangen.

In einer weiteren vorteilhaften Ausgestaltung der Trocknungseinheit ist vorgesehen, dass das Gehäuse der Trocknungseinheit eine Einlassseite und eine Auslassseite aufweist, wobei an der Einlassseite eine erste Einlassklappe und/oder eine zweite Einlassklappe und an der Auslassseite eine erste Auslassklappe und/oder eine zweite Auslassklappe angeordnet sind. Dadurch können große Öffnungsquerschnitte auf der Einlass- sowie auf der Auslassseite realisiert werden, wodurch eine strömungsoptimierte, widerstandsarme Durchströmung der Trocknungseinheit möglich ist. Ferner kann durch die Klappe ein großer Öffnungsquerschnitt realisiert werden, welcher eine gleichmäßige Durchströmung der Trocknungseinheit mit einem zu trocknenden Gasstrom erleichtert.

In weiterer bevorzugter Ausgestaltung der Erfindung ist vorgesehen, dass in Hauptströmungsrichtung eines Gasstroms durch das Gehäuse der Trocknungseinheit stromabwärts der Trocknungskassetten ein Trennblech angeordnet ist. Ein Trennblech ermöglicht die Reduzierung von Querströmungen, wodurch eine Verbesserung der Trocknung und/oder der Regeneration des Trocknungsmaterials erreicht wird. Ferner ermöglicht ein Trennblech eine Aufteilung eines Luftstroms auf zwei Hälften der Trocknungseinheit, wodurch die Wärmerückgewinnung in einem Wärmeverschubluftbetrieb verbessert wird.

In einer vorteilhaften Ausführungsform der Trocknungseinheit ist vorgesehen, dass an einer Auslassseite des Gehäuses mindestens ein Spüllufteinlass und an der Einlassseite mindestens ein Spülluftauslass ausgebildet ist. Dadurch kann auf einfache Art und Weise ein Spülluftstrom durch die Trocknungseinheit geführt werden, welcher in entgegengesetzter Richtung zu dem Hauptluftstrom zur Abtrennung der Feuchtigkeit aus dem Gasstrom verläuft. Dies ermöglicht eine einfache und effiziente Regeneration des Trocknungsmittels in den Trocknungskassetten, wodurch die Anlage für ein erneutes Trocknen eines Gasstrom vorbereitet werden kann.

In einer vorteilhaften Ausgestaltung der Trocknungseinheit ist ferner vorgesehen, dass die Trocknungseinheit einen Wärmetauscher zur Erhitzung des Sorbentmaterials aufweist. Dadurch ist eine besonders effiziente Aufheizung und Regeneration des Sorbentmaterials möglich.

Besonders bevorzugt ist dabei, wenn ein Einlass und ein Auslass für den Wärmeverschub an einer von der Einlassseite und der Auslassseite verschiedenen Seitenwand des Gehäuses ausgebildet sind. Dadurch ist eine besonders kompakte Ausführung der Trocknungseinheit möglich. Zudem reduziert ein Anschluss der Wärmeverschubluft an einer Seitenwand den Strömungswiderstand der Hauptströmung und verbessert die Gleichverteilung der Luft auf die Sorbentkassetten, da für den Hauptluftstrom größere Eintrittsquerschnitte zur Verfügung stehen.

In einer weiteren bevorzugten Ausgestaltung der Erfindung ist vorgesehen, dass zwischen einer Einlassöffnung und dem Träger ein erstes Strömungsmanipulationselement angeordnet ist. Dadurch kann der Gasstrom entsprechend aufgeteilt und/oder umgelenkt werden, sodass eine noch gleichmäßigere Durchströmung der Trocknungskassetten erreicht wird oder der Gasstrom gezielt in bestimmte Bereiche der Trocknungseinheit umgelenkt werden kann.

Ein weiterer Teilaspekt der Erfindung betrifft eine Anlage zur Abtrennung von Kohlenstoffdioxid aus einem Gasstrom, insbesondere aus einem Luftstrom, mit einer in den vorhergehenden Abschnitten beschriebenen Trocknungseinheit. Eine solche Anlage ermöglicht eine besonders effiziente Trocknung eines Gasstroms, wodurch ein getrockneter Gasstrom zur Abtrennung von Kohlenstoffdioxid bereitgestellt werden kann.

In einer bevorzugten Ausgestaltung der Anlage ist vorgesehen, dass die Anlage eine der Trocknungseinheit in Strömungsrichtung eines Hauptluftstroms durch die Anlage vorgeschaltete Vorkonditionierungseinheit, eine der Trocknungseinheit nachgeschaltete Sorptionseinheit, sowie ein Förderelement zur Förderung eines Gasstroms durch die Anlage aufweist. Dadurch ist eine besonders effiziente Abtrennung von Kohlenstoffdioxid aus dem Gasstrom möglich. Dabei kann insbesondere bei einer mit einem Physisorbenten arbeitenden Anlage zur Abtrennung von Kohlenstoffdioxid aus der Umgebungsluft die Ausbeute an abgetrenntem Kohlenstoffdioxid sowie die Energieeffizienz gesteigert werden.

In einer vorteilhaften Ausgestaltung der Anlage ist vorgesehen, dass die Anlage stromabwärts der Sorptionseinheit eine Speichereinheit zur Aufnahme des in der Sorptionseinheit abgetrennten Kohlenstoffdioxids aufweist. Dadurch ist eine Speicherung des Kohlenstoffdioxids möglich, wobei das Kohlenstoffdioxid dauerhaft eingelagert und/oder als Ausgangsstoff einem verarbeitenden Prozess zugeführt werden kann.

Ein weiterer Teilaspekt der Erfindung betrifft ein Verfahren zur Trocknung eines Gasstroms in einer Anlage zur Abtrennung von Kohlenstoffdioxid aus einem Gasstrom, insbesondere aus einem Luftstrom, mit einer solchen Trocknungseinheit, welches folgende Schritte umfasst:
- Betreiben der Trocknungseinheit in einem ersten Betriebszustand, in welchem ein Hauptluftstrom in einer Hauptströmungsrichtung durch die Trocknungseinheit geführt wird, wobei dem Hauptluftstrom die enthaltene Feuchtigkeit in zumindest einem ersten Trocknungsmodul den Trocknungskassetten zumindest teilweise entzogen wird,
- Betreiben der Trocknungseinheit in einem zweiten Betriebszustand, in welchem ein mit Abwärme aus einem anderen Trocknungsmodel erhitzter Gasstrom derart durch die Trocknungseinheit zirkuliert, dass zumindest eine Teilmenge der im Gasstrom enthaltenen Wärme genutzt wird, um das Trocknungsmaterial in einem weiteren Trocknungsmodul vorzuwärmen und
- Betreiben der Trocknungseinheit in einem dritten Betriebszustand, in welchem die Trocknungseinheit von einem Spülluftstrom in einer der Hauptströmungsrichtung entgegengesetzten Spülluftstromrichtung durchströmt wird und die in den Trocknungskassetten aufgenommene Feuchtigkeit zumindest teilweise wieder aus den Trocknungskassetten ausgetragen wird.

Das Verfahren ermöglicht eine besonders energieeffiziente Trocknung eines Gasstroms, insbesondere eine Luftstroms, in einer Anlage zur Abtrennung von Kohlenstoffdioxid aus einem Gasstrom.

In einer vorteilhaften Ausgestaltung des Verfahrens ist vorgesehen, dass die Trocknungseinheit in einem vierten Betriebszustand betrieben wird, in welchem ein Trocknungsmodul von einem kalten, trockenen Gasstrom derart durchströmt wird, dass zumindest eine Teilmenge der im Sorbentmaterial enthaltenen Wärme des Trocknungsmoduls zur weiteren Nutzung abgeführt wird. Dadurch ist eine zumindest anteilige Rückgewinnung der für den Trocknungsprozess notwendigen Prozesswärme möglich, wodurch die Energieeffizienz des Verfahrens weiter verbessert werden kann.

In einer vorteilhaften Ausgestaltung des Verfahrens ist vorgesehen, dass der getrocknete Hauptluftstrom einer Sorptionseinheit zugeführt wird und das in dem getrockneten Hauptluftstrom enthaltende Kohlenstoffdioxid in der Sorptionseinheit aus dem Hauptluftstrom abgetrennt wird. Durch die vorherige Trocknung kann die Ausbeute und Energieeffizienz bei der Abtrennung von Kohlenstoffdioxid aus dem Gasstrom weiter gesteigert werden.

In einer vorteilhaften Ausgestaltung des Verfahrens ist vorgesehen, dass die Abluft aus der Sorptionseinheit, in welcher das Kohlenstoffdioxid aus der Umgebungsluft abgetrennt wird, der Trocknungseinheit zugeführt wird, um die Trocknungsmodule der Trocknungseinheit zu regenerieren und die in den Trocknungsmodulen gebundene Feuchtigkeit wieder auszutreiben. Dabei wird der Wärmeverschub innerhalb der Trocknungseinheit genutzt, um eine möglichst energieeffiziente Trocknung des Hauptluftstroms und eine parallele Regeneration von Trocknungsmodulen innerhalb der Trocknungseinheit zu realisieren.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine erfindungsgemäße Anlage zur Abtrennung von Kohlenstoffdioxid aus einem Gasstrom mit einer erfindungsgemäßen Trocknungseinheit,
- Figur 2: ein bevorzugtes Ausführungsbeispiel für ein Trocknungsmodul einer erfindungsgemäße Trocknungseinheit bei einer Trocknung eines Hauptluftstroms in einer schematischen Darstellung,
- Figur 3: das in Fig. 2 dargestellte Trocknungsmodul bei einem Wärmeverschub zum Aufheizen des Trocknungsmoduls,
- Figur 4: das in Fig. 2 und Fig. 3 dargestellte Trocknungsmodul bei einer Regeneration des in den Trocknungskassetten des Trocknungsmoduls enthaltenen Trocknungsmittels,
- Figur 5: eine erfindungsgemäße Trocknungseinheit und eine Gasverteilungsstruktur zur Verteilung eines Gasstroms innerhalb der Trocknungseinheit,
- Figur 6: eine schematische Darstellung einer Luftführung durch eine erfindungsgemäße Trocknungseinheit,
- Figur 7: eine weitere schematische Darstellung einer Luftführung durch eine erfindungsgemäße Trocknungseinheit,
- Figur 8: ein Ablaufdiagramm für ein erfindungsgemäßes Verfahren zur Trocknung eines Gasstroms in einer Anlage zur Abtrennung von Kohlenstoffdioxid aus dem getrockneten Gasstrom, und
- Figur 9: eine Trocknungseinheit mit mehreren Trocknungsmodulen, bei welcher die Energieeffizienz durch einen Wärmeverschub innerhalb der Trocknungseinheit erhöht wird.

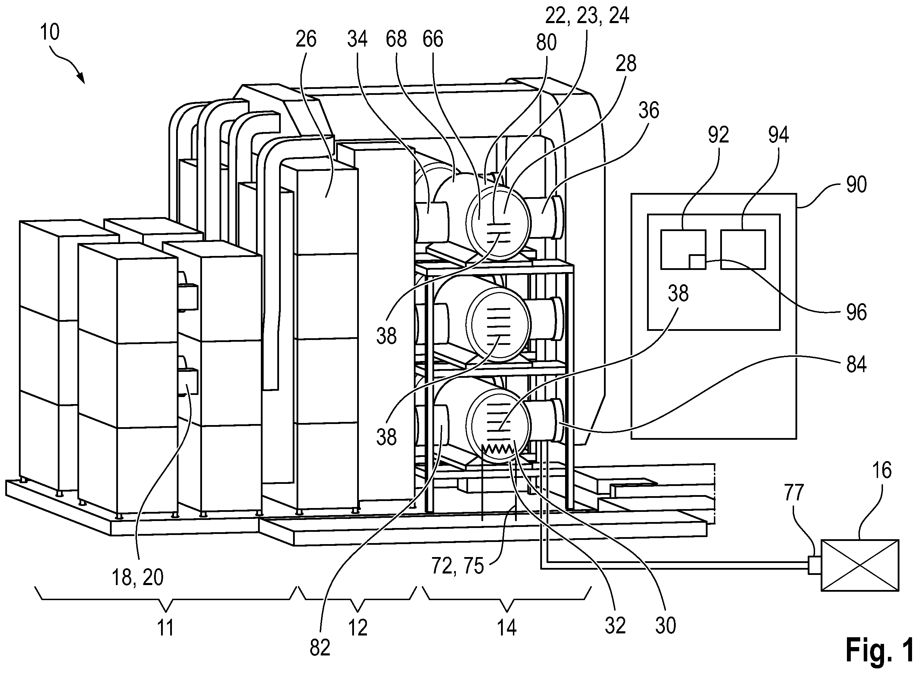

Figur 1 zeigt eine Anlage 10 zur Abtrennung von Kohlenstoffdioxid aus einem Gasstrom, insbesondere aus der Umgebungsluft. Dabei wird der Anlage 10 ein Gasstrom zugeführt, welcher eine gewisse Restfeuchte aufweist und diesem Gasstrom wird Kohlenstoffdioxid und Wasserdampf entzogen. Aus der Anlage 10 strömt ein Abluftstrom aus, welcher gegenüber der einströmenden Gase ein getrocknetes, kohlenstoffdioxid-reduziertes Gas aufweist. Die Anlage 10 umfasst eine Vorkonditionierungseinheit 11, in welcher ein Gasstrom gefiltert und vorgetrocknet wird. Dazu enthält die Vorkonditionierungseinheit 11 mindestens eine Filtereinheit und eine Trocknungseinheit, um einen Gasstrom für die weitere Verarbeitung in der Anlage 10 aufzubereiten. Ferner enthält die Vorkonditionierungseinheit 11 ein Förderelement 18, insbesondere ein Gebläse 20, um einen solchen Gasstrom zu erzeugen und die Umgebungsluft durch die Anlage 10 zu fördern.

Die Anlage 10 umfasst ferner eine Trocknungseinheit 12, in welcher dem Gasstrom die enthaltene Restfeuchte zumindest teilweise entzogen wird. Als Trocknungsmittel für die Trocknungseinheit 12 kann beispielsweise ein hydrophiles Material wie Silica-Gel verwendet werden. Prinzipiell kann jedes Trocknungsmaterial verwendet werden, welches dazu geeignet ist, Feuchtigkeit aus der Luft aufzunehmen. Insbesondere kann in der Trocknungseinheit 12 auch ein Sorbentmaterial 22, insbesondere ein Physisorbent 23, als Trocknungsmittel vorgesehen sein. Bevorzugt wird ein Trocknungsmittel verwendet, welches durch eine entsprechende Prozessführung nach der Aufnahme der Luftfeuchte wieder regeneriert und erneut dem Prozess zugeführt werden kann. Dabei wird ein Trocknungsgrad des Gasstroms angestrebt, bei welchem die Restfeuchte der Luft einen Taupunkt von maximal -30 °C, vorzugsweise -50 °C, besonders bevorzugt maximal -60 °C Taupunkt beträgt.

Die Anlage 10 umfasst ferner eine Sorptionseinheit 14, in welcher das Kohlenstoffdioxid aus dem Gasstrom, insbesondere aus der Umgebungsluft, gebunden wird. Dabei wird das sich in dem getrockneten Gasstrom befindliche Kohlenstoffdioxid in einem Sorbentmaterial 22, insbesondere in einem Physisorbenten 23, besonders bevorzugt in einem Zeolithmaterial 24 eingespeichert. Die Sorptionseinheit 14 umfasst einen oder mehrere Sorptionsmodule 30 mit jeweils einem oder mehreren Sorbentbetten 38, wobei die Sorptionsmodule 30 jeweils ein zylindrisches Gehäuse 32 aufweisen. Alternativ können die Sorptionsmodule 30 auch von einer Zylinderform abweichende Geometrien aufweisen. Das Gehäuse 32 weist eine Mantelfläche 80 auf, wobei an einer ersten Seite 82 der Mantelfläche 80 eine Einlassöffnung 34 und an einer der ersten Seite 82 gegenüberliegenden zweiten Seite 84 der Mantelfläche 80 eine Auslassöffnung 36 ausgebildet ist. Das zylindrische Gehäuse 32 wird zudem durch eine erste Stirnseite 66 und eine zweite Stirnseite 68 begrenzt.

Darüber hinaus weist die Anlage 10 eine Speichereinheit 16 auf, in welcher das in der Sorptionseinheit 14 aus dem Gasstrom abgetrennte Kohlenstoffdioxid in konzentrierter Form eingespeichert wird. Alternativ oder zusätzlich kann das desorbierte Kohlenstoffdioxid auch direkt einer weiteren Verwendung zugeführt werden oder ein Gasstrom aufgeteilt werden, wobei eine Teilmenge des desorbierten Kohlenstoffdioxids in der Speichereinheit 16 eingespeichert und eine weitere Teilmenge einem verarbeitenden Prozess zugeführt wird.

Die Trocknung des Gasstroms erfolgt in einem ersten Prozessraum 26, welcher durch Verschlusselemente, insbesondere durch Klappen 50, 52, 54, 56 im Wesentlichen gasdicht von der Umgebung abgetrennt werden kann. Dabei weist der erste Prozessraum 26 in dem dargestellten Ausführungsbeispiel zwei Einlassklappen 50, 52 und zwei Auslassklappen 54, 56 auf. In dem ersten Prozessraum 26 kann ein Heizelement 72 angeordnet sein, um die Temperatur des Trocknungsmittels in der Trocknungseinheit 12 beziehungsweise im ersten Prozessraum 26 zu manipulieren. In dem ersten Prozessraum 26 beziehungsweise in der Trocknungseinheit 12 können ferner Sensoren zur Erfassung einer Temperatur, eines Drucks, einer Kohlenstoffdioxidkonzentration, einer Strömungsgeschwindigkeit und/oder einer relativen oder absoluten Feuchte des Gasstroms angeordnet sein.

Die Adsorption und anschließende Desorption von Kohlenstoffdioxid erfolgt vorzugsweise in einem zweiten Prozessraum 28, welcher durch Verschlusselemente im Wesentlichen gasdicht von der Umgebung abgetrennt werden kann. Ferner weist der zweite Prozessraum 28 ein Heizelement, insbesondere einen Wärmetauscher 75 auf, um die Temperatur insbesondere beim Desorptionsprozess entsprechend anheben zu können und das im Sorbentmaterial 22 adsorbierte Kohlenstoffdioxid wieder freizusetzen. An dem zweiten Prozessraum 28, beziehungsweise an der Sorptionseinheit 14, kann eine Unterdruckpumpe 77 vorgesehen sein, um den Luftdruck in dem zweiten Prozessraum 28 oder einer Gasleitung, welche den zweiten Prozessraum 28 mit der Speichereinheit 16 verbindet, zu manipulieren und insbesondere während eines Desorptionsprozesses abzusenken. Der zweite Prozessraum 28 kann fluidisch mit der Speichereinheit 16 verbunden sein, in welcher das aus der Umgebungsluft abgetrennte Kohlenstoffdioxid eingelagert werden kann. In dem zweiten Prozessraum 28, beziehungsweise in der Sorptionseinheit 14, sind ein Temperatursensor, ein Drucksensor, ein Luftfeuchtigkeitssensor, ein Sensor zur Erfassung der Kohlenstoffdioxidkonzentration, ein Sensor zur Erfassung der Strömungsgeschwindigkeit, ein Massenstromsensor und/oder ein Volumenstromsensor, angeordnet. Alternativ kann die Sorptionseinheit 14 auch mit einem Verbraucher verbunden sein, in welchem das abgetrennte Kohlenstoffdioxid in einem nachfolgenden Verfahrensschritt weiterverarbeitet wird und insbesondere als Ausgangsstoff zur Herstellung eines neuen Stoffes dient.

Das Förderelement 18 zur Förderung eines Gasstroms durch die Anlage 10, insbesondere ein Gebläse 20, ist vorzugsweise in der Vorkonditionierungseinheit 11 angeordnet und in diese integriert. Das Förderelement 18 weist eine Antriebseinheit auf, deren Leistung über eine Leistungsregelung entsprechend angepasst werden kann. Alternativ kann das Förderelement 18 auch in einem Kanal zur Zuführung der Luft zu der Anlage 10 oder einem Kanal zur Abführung der Luft aus der Anlage 10 angeordnet sein.

Die Anlage 10 wird vorzugsweise aus erneuerbaren Energien wie Windkraft oder Solarenergie mit Strom versorgt, um beim Betrieb keine zusätzlichen Kohlenstoffdioxidemissionen zu erzeugen. Dazu ist eine Windkraftanlage und/oder eine Solaranlage, insbesondere eine Solarthermieanlage oder eine Photovoltaikanlage, vorgesehen, um die Anlage mit erneuerbarer Energie zu versorgen.

Die Anlage 10 weist ferner eine Steuerungseinheit 90 mit einer Speichereinheit 92 und einer Recheneinheit 94 auf, wobei in der Speichereinheit 92 ein Computerprogrammcode 96 abgelegt ist, welcher dazu eingerichtet ist, bei Ausführung durch die Recheneinheit 94 der Steuerungseinheit 90 den Betrieb der Anlage 10 zur Abtrennung von Kohlenstoffdioxid aus dem Gasstrom, insbesondere aus der Umgebungsluft, zu steuern. Die Steuerungseinheit 90 kann über eine Datenverbindung mit einem Datenzentrum in Verbindung stehen, welches der Anlage 10 Daten zur Steuerung der Anlage 10 zur Verfügung stellt oder mit dieser austauscht.

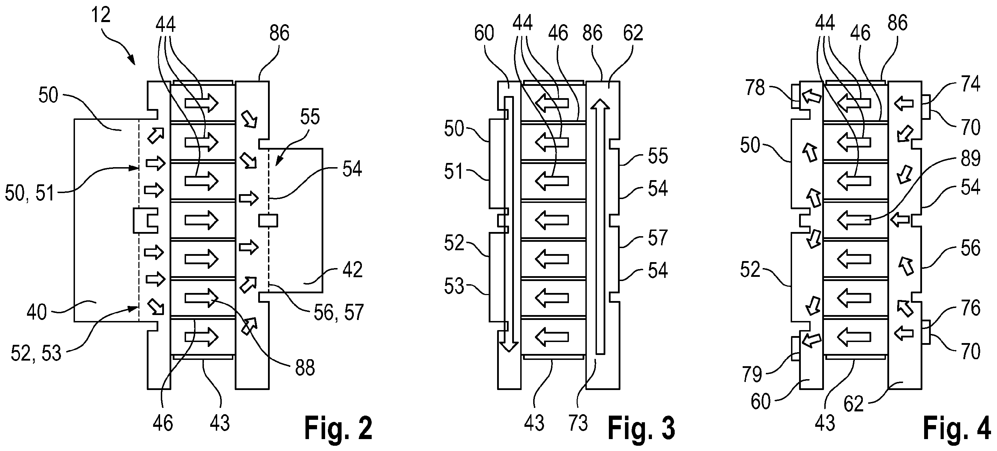

In Figur 2 ist ein bevorzugtes Ausführungsbeispiel eines Trocknungsmoduls 100, 102, 104, 106, 108, 110, 112, 114 einer erfindungsgemäßen Trocknungseinheit 12 dargestellt. Das Trocknungsmodul 100, 102, 104, 106, 108, 110, 112, 114 weist ein Gehäuse 86 mit einer Einlassseite 40 und einer Auslassseite 42 sowie zwischen der Einlassseite 40 und der Auslassseite 42 ausgebildeten Seitenwänden 43 auf. In dem Trocknungsmodul 100, 102, 104, 106, 108, 110, 112, 114 der Trocknungseinheit 12 ist eine Mehrzahl von Trocknungskassetten 44 angeordnet, welche horizontal übereinander und/oder vertikal nebeneinander in einem gemeinsamen Träger 46 aufgenommen sind.

An der Einlassseite 40 ist eine Einlassklappe 50 ausgebildet, durch welche eine Einlassöffnung 51 geöffnet oder verschlossen werden kann und durch welche ein Hauptluftstrom 88 in die Trocknungseinheit 12 eintreten kann. Ferner kann zwischen der Einlassöffnung 51 und den Trocknungskassetten 44 ein Strömungsmanipulationselement 61 angeordnet sein, mit welchem der durch die Einlassöffnung 51 eintretende Hauptluftstrom 88 umgelenkt und/oder aufgeteilt werden kann. Das Strömungsmanipulationselement 61 umfasst mehrere Leitbleche 65, welche den Hauptluftstrom 88 umlenken oder aufteilen. Die Trocknungseinheit 12 wird in dem in Figur 2 dargestellten Betriebszustand in einem Trocknungsmodus betrieben, in welchem dem Hauptluftstrom 88 Feuchtigkeit durch die Trocknungskassetten 44 entzogen wird.

An der Auslassseite 42 ist eine Auslassklappe 54 vorgesehen, mit welcher eine Auslassöffnung 55 geöffnet und verschlossen werden kann und durch welche ein Hauptluftstrom 88 aus der Trocknungseinheit 12 austreten kann. Dabei ist das Trocknungsmodul 100, 102, 104, 106, 108, 110, 112, 114 in Figur 2 während eines Trocknungsprozesses dargestellt, bei welchem die im Gasstrom enthaltene Feuchtigkeit in dem Trocknungsmittel der Trocknungskassetten 44 adsorbiert wird.

In Figur 3 ist das in Fig. 2 dargestellte Trocknungsmodul 100, 102, 104, 106, 108, 110, 112, 114 während eines Wärmeverschubs dargestellt, bei welchem das Trocknungsmodul 100, 102, 104, 106, 108, 110, 112, 114 durch die Abwärme eines anderen Trocknungsmoduls 100, 102, 104, 106, 108, 110, 112, 114 und/oder die Abwärme aus der Sorptionseinheit 14 aufgeheizt wird.

Das Trocknungsmodul 100, 102, 104, 106, 108, 110, 112, 114 weist ein Gehäuse 86 mit einer Einlassseite 40 und einer Auslassseite 42 sowie zwischen der Einlassseite 40 und der Auslassseite 42 ausgebildeten Seitenwänden 43 auf. In dem Trocknungsmodul 100, 102, 104, 106, 108, 110, 112, 114 ist eine Mehrzahl von Trocknungskassetten 44 angeordnet, welche horizontal übereinander und/oder vertikal nebeneinander in einem gemeinsamen Träger 46 aufgenommen sind.

An der Einlassseite 40 sind zwei Einlassöffnungen 51, 53 ausgebildet, welche durch eine erste Einlassklappe 50 und eine zweite Einlassklappe 52 geöffnet oder verschlossen werden können und welche im dargestellten Prozessschritt verschlossen sind. Ferner sind in dem Trocknungsmodul 100, 102, 104, 106, 108, 110, 112, 114 ein Einlassraum 60 und ein Auslassraum 62 ausgebildet, welche als Pfad für den Wärmeverschub zur Energierückgewinnung genutzt werden. Dabei ist die Einlassöffnung 51 für den Wärmeverschub im Auslassraum 62 an der Stirnseite 43 angeordnet und die Auslassöffnung im Einlassraum 60 an derselben Stirnseite 43, um eine kompakte Bauweise bei der Verschaltung der einzelnen Trocknungsmodule 100, 102, 104, 106, 108, 110, 112, 114 zu ermöglichen. An der Auslassseite 42 sind zwei Auslassöffnungen 55, 57 ausgebildet, welche durch eine erste Auslassklappe 54 und eine zweite Auslassklappe 56 geöffnet oder verschlossen werden können und welche im dargestellten Prozessschritt verschlossen sind.

In Figur 4 ist das in Figur 2 und Figur 3 dargestellte Trocknungsmodul 100, 102, 104, 106, 108, 110, 112, 114 in einem weiteren Betriebszustand dargestellt, in welchem eine Regeneration des Trocknungsmittels in den Trocknungskassetten 44 erfolgt.. Das Trocknungsmodul 100, 102, 104, 106, 108, 110, 112, 114 wird in dem in Figur 4 dargestellten Betriebszustand in einem Spülluftbetrieb betrieben, in welchem ein Spülluftstrom 89 entgegen der Hauptströmungsrichtung des in Figur 2 dargestellten Hauptluftstroms 88 durch die Trocknungseinheit geführt wird, um die in den Trocknungskassetten 44 aufgenommene Luftfeuchtigkeit wieder auszutragen.

Die Trocknungseinheit 12 weist ein Gehäuse 86 mit einer Einlassseite 40 und einer Auslassseite 42 sowie zwischen der Einlassseite 40 und der Auslassseite 42 ausgebildeten Seitenwänden 43 auf. In der Trocknungseinheit 12 ist eine Mehrzahl von Trocknungskassetten 44 angeordnet, welche horizontal übereinander und/oder vertikal nebeneinander in einem gemeinsamen Träger 46 aufgenommen sind.

An der Einlassseite 40 sind zwei Einlassöffnungen 51, 53 ausgebildet, welche durch eine erste Einlassklappe 50 und eine zweite Einlassklappe 52 geöffnet oder verschlossen werden können und welche im Prozessschritt Spülen beziehungsweise bei der Regeneration geschlossen sind. An der Auslassseite 42 sind zwei Auslassöffnungen 55, 57 ausgebildet, welche durch eine erste Auslassklappe 54 und eine zweite Auslassklappe 56 geöffnet oder verschlossen werden können und welche im dargestellten Prozessschritt Spülen geschlossen sind.

Das Trocknungsmodul 100, 102, 104, 106, 108, 110, 112, 114 weist auf der Auslassseite 42 einen erste Spüllufteinlass 74 und einen zweiten Spüllufteinlass 76 auf, welche jeweils durch ein Lochblech 70 abgedeckt sind. Dabei ist das Lochblech 70 in einem Abstand von 15% bis 45%, vorzugsweise 20% bis 30% der Breite der Einlassöffnung 51 als Prallplatte angebracht. Durch die Spüllufteinlässe 74, 76 kann ein Spülluftstrom 89 in das Trocknungsmodul 100, 102, 104, 106, 108, 110, 112, 114 geleitet werden, um die Feuchtigkeit aus den Trocknungskassetten 44 auszutreiben. Das Trocknungsmodul 100, 102, 104, 106, 108, 110, 112, 114 weist ferner auf der Einlassseite 40 einen ersten Spülluftauslass 78 und einen zweiten Spülluftauslass 79 auf, durch welche der Spülluftstrom 89 nach Aufnahme der Feuchtigkeit wieder aus dem Trocknungsmodul 100, 102, 104, 106, 108, 110, 112, 114 der Trocknungseinheit 12 heraus geführt werden kann.

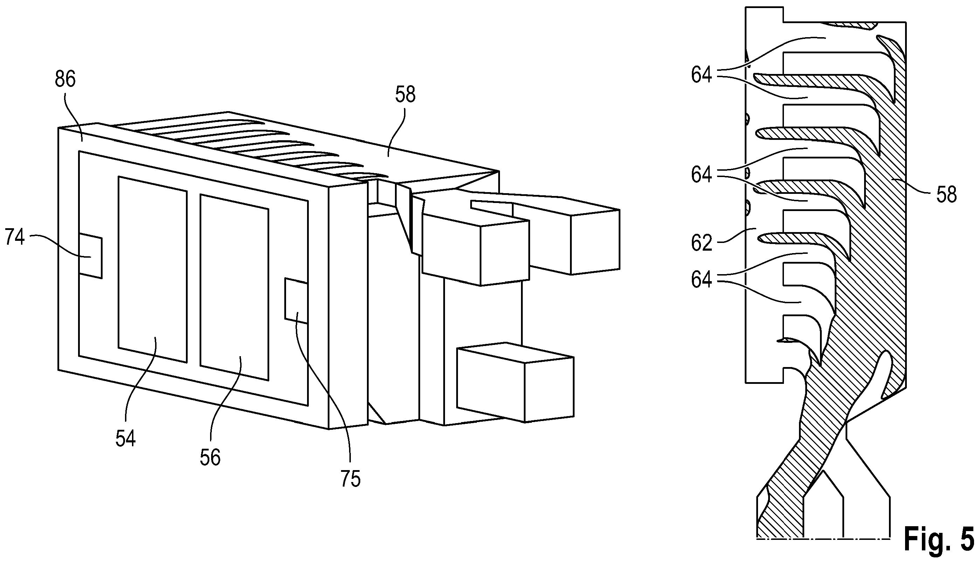

In Figur 5 ist eine Gasverteilungsstruktur 58 für eine Trocknungseinheit 12 dargestellt, welche vorzugsweise oberhalb der Trocknungskassetten 44 in dem Gehäuse 86 angeordnet ist. Dabei erfolgt das Einströmen und das Ausströmen eines durch die Gasverteilungsstruktur 58 geführten Gasstroms an einer Seitenwand 43 des Gehäuses 86. Dabei ist die Gasverteilungsstruktur 58 dazu ausgebildet, eine möglichst gleichmäßige Durchströmung der Trocknungsmodule 100, 102, 104, 106, 108, 110, 112, 114 zu realisieren und weder einen Hauptluftstrom 88 noch einen Spülluftstrom 89 durch die Trocknungsmodule 100, 102, 104, 106, 108, 110, 112, 114 zu behindern. Dies wird insbesondere durch eine Kombination einer Umlenkung des Wärmeverschubluftstroms um 90° mit einem zusätzlichen Trennblech 48 erreicht. Durch die Umlenkung in der Gasverteilstruktur 58 erfolgt eine Reduzierung des Staudrucks im hinteren Bereich des Auslassraums 62. Dabei wird durch das Trennblech 48 eine Rückströmung behindert, sodass der Gasstrom zunächst durch die Trocknungskassetten 44 des jeweiligen Trocknungsmoduls 100, 102, 104, 106, 108, 110, 112, 114 geführt wird.

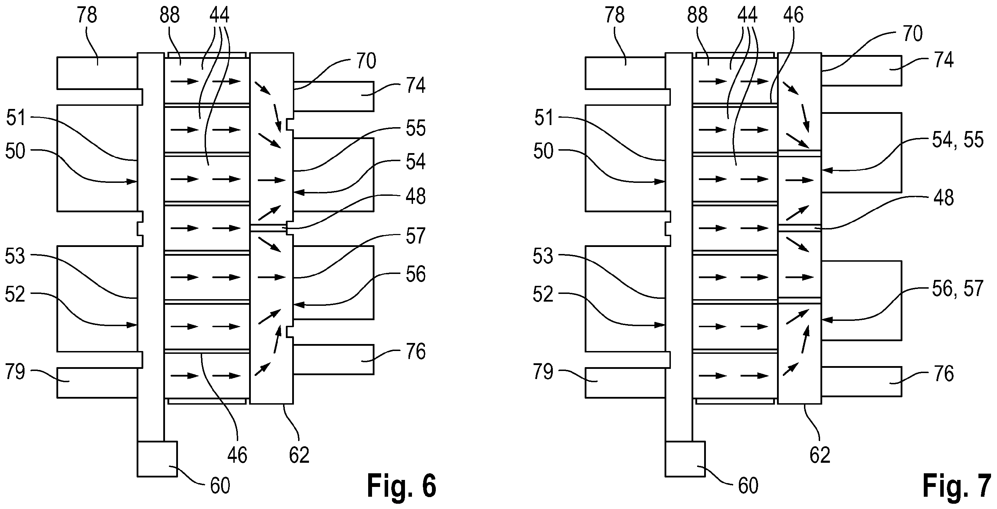

In Figur 6 ist eine schematische Darstellung einer Luftführung durch ein Trocknungsmodul 100, 102, 104, 106, 108, 110, 112, 114 einer erfindungsgemäßen Trocknungseinheit 12 dargestellt. Dabei ist zwischen den Trocknungskassetten 44 und der Auslassseite 42 des Gehäuses 86 ein Trennblech 48 vorgesehen, um den Gasstrom durch das Trocknungsmodul 100, 102, 104, 106, 108, 110, 112, 114 zu vereinfachen und insbesondere Querströmungen zu vermeiden. Dabei wird die Auslassseite 42 in zwei Hälften unterteilt, wobei jede Hälfte jeweils eine Auslassöffnung 55, 57 aufweist, welche durch eine Auslassklappe 54, 56 verschließbar ist und einen Spüllufteinlass 74, 76 aufweist, um die jeweilige Hälfte der Trocknungseinheit 12 zu regenerieren. Dabei wird dieser Hauptluftstrom 88 durch das Trocknungsmodul 100, 102, 104, 106, 108, 110, 112, 114 durch das Trennblech 48 nicht wesentlich gestört.

In Figur 7 ist ein weiteres Ausführungsbeispiel für eine Luftführung bei einer Wärmerückgewinnung durch einen Wärmeverschub in einer erfindungsgemäßen Trocknungseinheit 12 dargestellt. Bei im Wesentlichen gleichem Aufbau wie zu Figur 6 ausgeführt, ist in diesem Ausführungsbeispiel die Auslassseite in vier Viertel unterteilt. Dadurch ist eine bessere Homogenisierung der Strömungswiderstände bei der Durchströmung der Trocknungseinheit 12 möglich. Zudem ist in diesem Ausführungsbeispiel ein dritter Spüllufteinlass vorgesehen, um die Feuchtigkeit aus dem mittleren Bereich der Trocknungseinheit 12 austragen zu können.

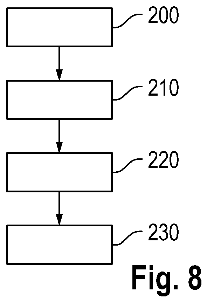

In Figur 8 ist ein Ablaufdiagramm für ein Verfahren zur Trocknung und nachfolgenden Abtrennung von Kohlenstoffdioxid aus einem Gasstrom, insbesondere einem Luftstrom, dargestellt. In einem Verfahrensschritt <200> wird das Trocknungsmodul 100, 102, 104, 106, 108, 110, 112, 114 in einem ersten Betriebszustand betrieben, in welchem ein Hauptluftstrom 88 in einer Hauptströmungsrichtung durch die Trocknungseinheit 12 geführt wird, wobei dem Hauptluftstrom 88 die enthaltene Feuchtigkeit in den Trocknungskassetten 44 zumindest teilweise, möglichst stark, insbesondere bis auf einen Taupunkt von -30°C, vorzugsweise auf einen Taupunkt von -50°, besonders bevorzugt auf einen Taupunkt von -60°C entzogen wird. Dazu werden die Einlassöffnungen 51, 53 durch die Einlassklappen 50, 52 sowie die Auslassöffnungen 55, 57 durch die Auslassklappen 54, 56 geöffnet, sodass der Hauptluftstrom 88 in Hauptströmungsrichtung zur Trocknung durch die Trocknungseinheit 12 strömen kann. Der getrocknete Hauptluftstrom 88 wird der Sorptionseinheit 14 zugeführt und dort wird in den Sorptionsmodulen 30 das in dem getrockneten Hauptluftstrom enthaltene Kohlendioxid abgetrennt.

In einem Verfahrensschritt <210> wird das Trocknungsmodul 100, 102, 104, 106, 108, 110, 112, 114 in einem zweiten Betriebszustand betrieben, in welchem ein durch die Restwärme eines anderen Trocknungsmoduls 100, 102, 104, 106, 108, 110, 112, 114 aufgeheizter Gasstrom derart durch die Trocknungseinheit 12 zirkuliert, dass zumindest eine Teilmenge der im Gasstrom enthaltenen Wärme genutzt wird, um das Trocknungsmittel vorzuwärmen . Dabei erfolgt eine Verteilung des Gasstroms durch die Gasverteilungsstruktur 58.

In einem Verfahrensschritt <220> wird das Trocknungsmodul 100, 102, 104, 106, 108, 110, 112, 114 in einem dritten Betriebszustand betrieben, in welchem die Trocknungseinheit 12 von einem Spülluftstrom 89 in einer der Hauptströmungsrichtung entgegengesetzten Spülluftstromrichtung durchströmt wird und die in den Trocknungskassetten 44 aufgenommene Feuchtigkeit zumindest teilweise wieder aus den Trocknungskassetten 44 ausgetragen wird. Dabei strömt der Spülluftstrom 89 durch den ersten Spüllufteinlass 74 und den zweiten Spüllufteinlass 76 in die Trocknungseinheit 12 ein und wird durch die Spülluftauslässe 78, 79 wieder aus der Trocknungseinheit 12 abgeführt. Zusätzlich wird das Trocknungsmittel durch die in den Trocknungskassetten 44 befindlichen Wärmetauscher 75 erhitzt.

In einem Verfahrensschritt <230> wird das Trockenmodul 100, 102, 104, 106, 108, 110, 112, 114 in einem vierten Betriebszustand betrieben, in welchem das Trockenmodul 100, 102, 104, 106, 108, 110, 112, 114 mit trockener kalter Abluft aus der Sorptionseinheit 14 durchströmt wird. Die über das Fluid abgeführte Wärme wird einem anderen Trocknungsmodul 100, 102, 104, 106, 108, 110, 112, 114, welches sich gerade in Verfahrensschritt <210> befindet zugeführt.

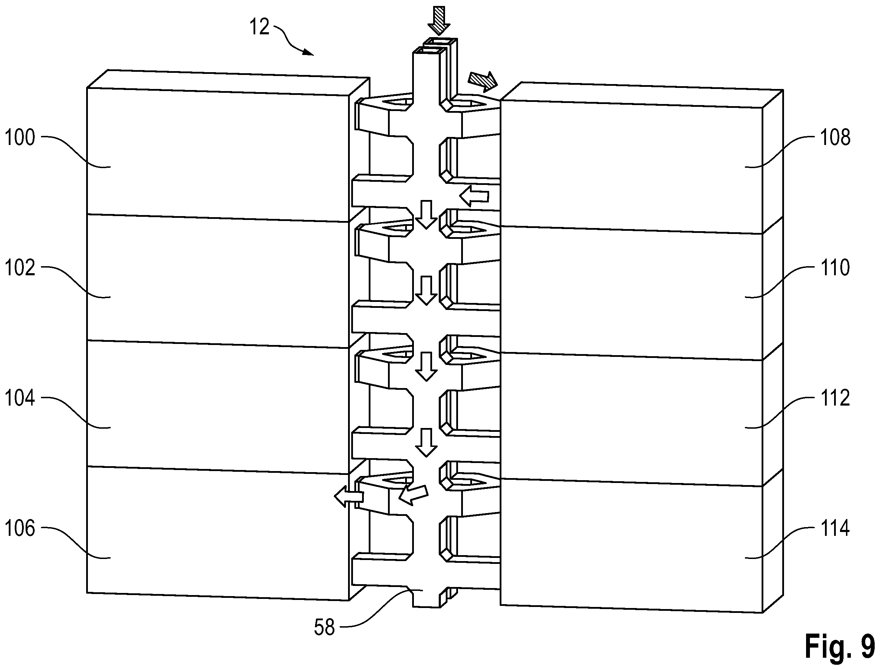

In Figur 9 ist eine Trocknungseinheit 12 mit acht Trocknungsmodulen 100, 102, 104, 106, 108, 110, 112, 114 dargestellt. Die Anzahl der Trocknungsmodule kann aber je nach Aufbau der Trocknungseinheit 12 auch größer oder kleiner sein. Nachfolgend sind die einzelnen in einem Trocknungsmodul 100, 102, 104, 106, 108, 110, 112, 114 ablaufende Prozessschritte am Beispiel des ersten Trocknungsmoduls 100 der Trocknungseinheit 12 dargestellt. Zum Start der Trocknungsphase des Hauptluftstroms 88 wird das erste Trocknungsmodul 100 von dem Hauptluftstrom 88 durchströmt, welcher zumindest teilweise getrocknet wird. Dieser Prozessschritt benötigt vorzugsweise 50% der gesamten Zykluszeit. Anschließend werden die Einlass- und Auslassklappen des Trocknungsmoduls 100 geschlossen und die Einlass- und Auslassklappen des Wärmeverschubs des Trocknungsmodul beziehungsweise der Gasverteilungsstruktur 58 geöffnet. Dabei wird ein vorgeheizter Gasstrom in das erste Trocknungsmodul 100 eingeleitet, welcher aus trockener Abluft stammt, welche durch die restliche Adsorptionswärme des zweiten Trocknungsmoduls 102 vorgeheizt wurde.

Nachdem der Gasstrom die Wärme an die Trocknungskassetten 44 in dem ersten Trocknungsmodul 100 abgegeben hat, wird der Gasstrom in die Umgebung abgegeben. Bei diesem Prozessschritt wird bereits ein Teil der Feuchtigkeit aus dem Trocknungsmittel in den Trocknungskassetten 44 ausgetrieben. Zusätzlich werden die Trocknungskassetten 44 durch das Aktivieren der Heizung aufgeheizt.

In einem weiteren Prozessschritt werden die Einlassklappen und Auslassklappen für den Wärmeverschub geschlossen und die Einlassklappen und Auslassklappen für den Spülluftstrom 89 geöffnet. Über den Spülluftstrom 89 wird der größte Teil des Wassers aus dem Trocknungsmittel in den Trocknungskassetten 44 desorbiert und über die Austrittsöffnungen der Spülluft an die Umgebung abgegeben.

In einem nachfolgenden Prozessschritt werden die Klappen des Wärmeverschubs erneut geöffnet, wobei das Trocknungsmodul 100 mit kalter Abluft aus der Sorptionseinheit 14 durchströmt wird. Die kalte, trockene Luft nimmt die Wärme aus den Trocknungskassetten 44 des ersten Trocknungsmoduls 100 auf und führt diese dem achten Trocknungsmodul 114 zu, welches die Trocknungsphase gerade abgeschlossen hat. Dadurch werden die Trocknungsmodule 100, 102, 104, 106, 108, 110, 112, 114 zyklisch mit den Phasen "Adsorption", "Aufwärmen", "Wärmeabgabe" und "Desorption" durchlaufen, wodurch sich eine besonders hohe Energieeffizienz für die Trocknungseinheit 12 einstellt.

### Bezugszeichenliste

- 10: Anlage zur Abtrennung von Kohlenstoffdioxid
- 11: Vorkonditioniereinheit
- 12: Trocknungseinheit
- 14: Sorptionseinheit
- 16: Speichereinheit
- 18: Förderelement

- 20: Gebläse
- 22: Sorbentmaterial
- 23: Physisorbent
- 24: Zeolithmaterial
- 26: erster Prozessraum
- 28: zweiter Prozessraum

- 30: Sorptionsmodul
- 32: Gehäuse
- 34: Einlassöffnung
- 36: Auslassöffnung
- 38: Sorbentbett

- 40: Einlassseite
- 42: Auslassseite
- 43: Seitenwand
- 44: Trocknungskassette
- 46: Träger
- 48: Trennblech

- 50: erste Einlassklappe
- 51: erste Einlassöffnung
- 52: zweite Einlassklappe
- 53: zweite Einlassöffnung
- 54: erste Auslassklappe
- 55: erste Auslassöffnung
- 56: zweite Auslassklappe
- 57: zweite Auslassöffnung
- 58: Gasverteilungsstruktur

- 60: Einlassraum
- 61: Strömungsmanipulationselement
- 62: Auslassraum
- 64: Verbindungskanal
- 65: Leitbleche
- 66: erste Stirnseite
- 68: zweite Stirnseite

- 70: Lochblech
- 72: Heizelement
- 74: erster Spüllufteinlass
- 75: Wärmetauscher
- 76: zweiter Spüllufteinlass
- 77: Unterdruckpumpe
- 78: erster Spülluftauslass
- 79: zweiter Spülluftauslass

- 80: Mantelfläche
- 82: erste Seite der Mantelfläche
- 84: zweite Seite der Mantelfläche
- 86: Gehäuse
- 88: Hauptluftstrom
- 89: Spülluftstrom

- 90: Steuerungseinheit
- 92: Speichereinheit
- 94: Recheneinheit
- 96: Computerprogrammcode

- 100: erstes Trocknungsmodul
- 102: zweites Trocknungsmodul
- 104: drittes Trocknungsmodul
- 106: viertes Trocknungsmodul
- 108: fünftes Trocknungsmodul

- 110: sechstes Trocknungsmodul
- 112: siebtes Trocknungsmodul
- 114: achtes Trocknungsmodul

## Patentansprüche

1. Trocknungseinheit (12) für eine Anlage (10) zur Abtrennung von Kohlenstoffdioxid aus einem Gasstrom, umfassend:
- ein Gehäuse (86),
- einer Mehrzahl von Trocknungsmodulen (100, 102, 104, 106, 108, 110, 112, 114),
- einen in dem Gehäuse (86) eines der Trocknungsmodule (100, 102, 104, 106, 108, 110, 112) angeordneten Träger (46) zur Aufnahme einer Mehrzahl von Trocknungskassetten (44),
- mehrere in dem Träger (46) aufgenommene Trocknungskassetten (44),
- mindestens eine Einlassklappe (50, 52) zum Verschließen einer Einlassöffnung (51, 53),
- mindestens eine Auslassklappe (54, 56) zum Verschließen einer Auslassöffnung (55, 57), sowie
- eine Gasverteilungsstruktur (58), welche einen Gasstrom durch die Trocknungseinheit (12) aufteilt.

2. Trocknungseinheit (12) nach Anspruch 1, wobei mehrere Trocknungskassetten (44) in dem Träger (46) übereinander und/oder nebeneinander angeordnet sind.

3. Trocknungseinheit (12) nach Anspruch 1 oder 2, wobei die Gasverteilungsstruktur (58) oberhalb der Trocknungskassetten (44) angeordnet ist.

4. Trocknungseinheit (12) nach einem der Ansprüche 1 bis 3, wobei die Gasverteilungsstruktur (58) einen Einlassraum (60) und einen von dem Einlassraum (60) beabstandeten Auslassraum (62) aufweist, wobei der Einlassraum (60) und Auslassraum (62) durch zwei oder mehr Verbindungskanäle (64) miteinander verbunden sind.

5. Trocknungseinheit (12) nach einem der Ansprüche 1 bis 4, wobei das Gehäuse (86) der Trocknungseinheit (12) eine Einlassseite (40) und eine Auslassseite (42) aufweist, wobei an der Einlassseite (40) eine erste Einlassklappe (50) und eine zweite Einlassklappe (52) und an der Auslassseite (42) eine erste Auslassklappe (54) und eine zweite Auslassklappe (56) angeordnet sind.

6. Trocknungseinheit (12) nach einem der Ansprüche 1 bis 5, wobei in Hauptströmungsrichtung eines Gasstroms durch das Gehäuse (86) stromabwärts der Trocknungskassetten (44) in der Mittelebene ein Trennblech (48) angeordnet ist.

7. Trocknungseinheit (12) nach einem der Ansprüche 1 bis 6, wobei an einer Auslassseite (42) des Gehäuses (86) mindestens ein Spüllufteinlass (74, 76) und an der Einlassseite (40) mindestens ein Spülluftauslass (78, 79) ausgebildet ist.

8. Trocknungseinheit (12) nach einem der Ansprüche 1 bis 7, wobei die Trocknungseinheit (12) einen Wärmetauscher (73) zur Erhitzung des Trocknungsmaterials eines Trocknungsmoduls (100, 102, 104, 106, 108, 110, 112, 114) der Trocknungseinheit (12) aufweist.

9. Trocknungseinheit (12) nach Anspruch 8, wobei ein Einlass und ein Auslass zur Durchführung eines Wärmeverschubs an einer von der Einlassseite (40) und der Auslassseite (42) verschiedenen Seitenwand des Gehäuses (86) ausgebildet sind.

10. Trocknungseinheit (12) nach einem der Ansprüche 1 bis 9, wobei zwischen einer Einlassöffnung (51, 53) und dem Träger (46) ein Strömungsmanipulationselement (61) angeordnet ist.

11. Anlage (10) zur Abtrennung von Kohlenstoffdioxid aus einem Gasstrom mit einer Trocknungseinheit (12) nach einem der Ansprüche 1 bis 10.

12. Anlage (10) nach Anspruch 11, wobei die Anlage (10) eine der Trocknungseinheit (12) in Strömungsrichtung eines Hauptluftstroms (88) durch die Anlage (10) vorgeschaltete Vorkonditionierungseinheit (11) und eine der Trocknungseinheit (12) nachgeschaltete Sorptionseinheit (14) sowie ein Förderelement (18) zur Förderung eines Gasstroms durch die Anlage (10) aufweist.

13. Verfahren zur Trocknung eines Gasstroms in einer Anlage (10) zur Abtrennung von Kohlenstoffdioxid mit einer Trocknungseinheit (12) nach einem der Ansprüche 1 bis 10, umfassend folgende Schritte:
- Betreiben der Trocknungseinheit (12) in einem ersten Betriebszustand, in welchem ein Hauptluftstrom (88) in einer Hauptströmungsrichtung durch die Trocknungseinheit (12) geführt wird, wobei dem Hauptluftstrom (88) die enthaltene Feuchtigkeit in zumindest einem ersten Trocknungsmodul (100, 102, 104, 106, 108, 110, 112, 114) zumindest teilweise entzogen wird,
- Betreiben der Trocknungseinheit (12) in einem zweiten Betriebszustand, in welchem ein mit Abwärme aus einem anderen Trocknungsmodule (100, 102, 104, 106, 108, 110, 112, 114) erhitzter Gasstrom derart durch die Trocknungseinheit (12) zirkuliert, dass zumindest eine Teilmenge der im Gasstrom enthaltenen Wärme genutzt wird um das Trocknungsmaterial in einem weiteren Trocknungsmodul (100, 102, 104, 106, 108, 110, 112, 114) vorzuwärmen, und
- Betreiben der Trocknungseinheit (12) in einem dritten Betriebszustand, in welchem die Trocknungseinheit (12) von einem Spülluftstrom (89) in einer der Hauptströmungsrichtung entgegengesetzten Spülluftstromrichtung durchströmt wird und die in den Trocknungskassetten (44) aufgenommene Feuchtigkeit zumindest teilweise wieder aus den Trocknungskassetten (44) ausgetragen wird.

14. Verfahren nach Anspruch 13, wobei die Trocknungseinheit (12) in einem vierten Betriebszustand betrieben wird, in welchem ein Trocknungsmodul (100, 102, 104, 106, 108, 110, 112, 114) von einem kalten, trockenen Gaststrom derart durchströmt wird, dass zumindest eine Teilmenge der im Sorbentmaterial (22) enthaltenen Wärme des Trocknungsmoduls (100, 102, 104, 106, 108, 110, 112, 114) zur weiteren Nutzung abgeführt wird.

15. Verfahren nach Anspruch 13 oder 14, wobei der Hauptluftstrom (88) einer Sorptionseinheit (14) zugeführt wird und das in dem Hauptluftstrom (88) enthaltende Kohlenstoffdioxid in der Sorptionseinheit (14) aus dem Hauptluftstrom (88) abgetrennt wird.
